# EUROPEAN PATENT APPLICATION

(11) **EP 4 672 085 A1**
(43) Date of publication of application: **31.12.2025**
(21) Application number: 24306037.3
(22) Date of filing: 27.06.2024
(51) Int. Cl.: G06N 3/006, G06N 3/08, G06N 5/01, G06N 20/10, G06N 20/20, G06N 3/045, G06N 3/0985, G05D 1/00, G05D 3/00

(54) **METHOD OF DECISION-SUPPORT FOR A VEHICLE OR RELATED VEHICLE SIMULATION AND ASSOCIATED SYSTEM**

(71) Applicant: THALES, 92190 Meudon (FR)
(72) Inventor: LAFOND, Daniel, Québec, G1P 4P5 (CA); THIVIERGE, Jean-Sébastien, Québec, G1P 4P5 (CA); LI, Jiye, Québec, G1P 4P5 (CA); PAUL, Tanya Sarah, Québec, G1P 4P5 (CA)
(74) Representative: Lavoix

(57) **Abstract**

Method of decision-support for a vehicle or related vehicle simulation, the method being executed by a system comprising a server (20), a client device (10) and a database (30), the method comprising the following phases:
a. acquisition phase (100) in which the server (20) receives an input data from a device onboard of the vehicle,
b. selection phase (200) in which the server (20) obtain a plurality of machine learning results R1, ..., Rn and computes at least one selection score, then at least one selection score being used to select a preferred machine-learning model MLp,
c. transmission phase (300) in which the server (20) sends the result Rp as a recommendation to the client device (10),
d. supply phase (400) in which the client device (10) provides the recommendation to a user (60),
e. return phase (500) in which the client device returns decision data to a database (30).

## Description

The present invention concerns a method of decision-support for a vehicle or related vehicle simulation. The present invention also concerns an associated system of decision-support for a vehicle or related vehicle simulation.

The invention is in the general field of machine learning algorithms and concerns more specifically methods and systems for providing recommendations using an online set of machine learning models with dynamic model evaluation and selection, which may be applied in the context of policy capturing.

Nowadays, artificial intelligence is widely used to support decision-making, particularly in avionics. Policy capturing refers to example-based learning for automatic reproduction the decision patterns applied by experts, in particular human experts. For example, policy capturing is achieved by applying supervised machine learning or statistical learning algorithms trained on labels which were provided by humans (or other sources such as groups of experts, organizations other computerized systems) whose decision/behavior pattern need to be predicted or replicated. Once a policy capturing model is trained based on a past observed decisions (related to a set of attributes of the decision context or target) such models can be used online for human decision support. Those online models may facilitate decision making and prevent errors, and serve for training purposes (artificial expert feedback) or for decision automation (as a control loop for software tools and devices). Policy capturing may be applied in various technical fields.

For example, it is interesting to apply such models to the field of avionics in order to increase flight safety, particularly in critical phase, such as takeoff, disturbance or landing.

Furthermore, such models make it possible to reduce human error and improve aircraft automation.

Patent application US2022/0027764 discloses a method for providing a recommendation for a given problem. The method proposed in this document is based on online machine learning with a dynamic evaluation and selection model that could be applied to the case of procedures to be followed when flying an aircraft. The aim of the proposed method is to be able to select a preferred model according to a convergence criterion, with the results validated by a human expert. However, such technology does not take into account new behaviors that deviate from the training data or for which the model has not been trained.

There is therefore a need for a method of decision-support for a vehicle that can assign a degree of reliability to the decisions it provides.

One aim of the invention is to propose a method of decision-support with improved accuracy and reliability.

To this aim, the subject matter of the invention is a method of decision-support for a vehicle or related vehicle simulation following an evaluation event by using a set of machine learning models, the method being executed by a system comprising a server, a client device and a database; the method being characterized in that it comprises the following phases :
a. an acquisition phase in which the server receives an input data from a device onboard of the vehicle, the input data comprising a plurality of parameter values from sensors,
b. a selection phase in which the server applies a set of machine learning models on the input data to obtain a plurality of machine learning results and computes at least one selection score, then at least one selection score being used to select a preferred machine-learning model,
c. a transmission phase in which the server sends the result of the preferred machine learning model as a recommendation and an associated degree of reliability to the client device on board of the vehicle, the associated degree of reliability being obtained as a function of the at least one selection score associated to the preferred machine learning model,
d. a supply phase in which the client device provides the recommendation to a user,
e. a return phase in which following the user's agreement or rejection of the recommendation, the client device returns decision data to a database, the decision data comprising an agreement indicator.

The method according to the invention may comprise one or more of the following features, taken solely, or according to any technical feasible combination:
- the computation of a selection score comprises the computation of at least one score among a prospective score, a retrospective score and an introspective score;
- the prospective score is computed based on a result of a supervisor machine learning meta-model, the supervisor machine learning meta-model being trained to provide a predicted confidence level of the result of each machine learning model as a function of input data, the result of said machine learning model and the context of the result;
- the confidence level predicted by the supervisor machine learning meta-model is in the range 0 to 1;
- the introspective score is computed, for each machine learning model, as a function of the input data and of training input data used for training said machine learning model;
- the retrospective score is computed, for each machine learning model, as a function of an agreement rate of results of said machine learning model computed from stored agreement indicators;
- the selection phase comprises, for each machine learning model, the computation of said prospective score, said introspective score and said retrospective score, and the selection score is a function of the prospective score, the introspective score and the retrospective score;
- the evaluation event is one of a user's request, the end of a preset time delay or a reception of new input data;
- a training phase is implemented after the return phase during which the server generates a plurality of re-trained machine learning models ML1, ..., MLn on new training data comprising decision data.

The invention further concerns a system of decision-support for a vehicle or related vehicle simulation following an evaluation event by using a set of machine learning models, the system comprising a server, a client device, a database and being configured to implement:
a. receiving an input data from a device onboard of the vehicle, the input data comprising a plurality of parameter values from sensors,
b. applying a set of machine learning models on the input data to obtain a plurality of machine learning results and computes at least one selection score, then at least one selection score being used to select a preferred machine-learning model,
c. sending the result of the preferred machine learning model as a recommendation and an associated degree of reliability to the client device on board of the vehicle, the associated degree of reliability being obtained as a function of the at least one selection score associated to the preferred machine learning model,
d. providing the recommendation to a user,
e. returning decision data to the database following the user's agreement or rejection of the recommendation, the decision data comprising an agreement indicator.

The invention will be better understood, upon reading of the following description, given only as an example, and made in reference to the following figures, in which:
- [Fig. 1] Figure 1 is a schematic representation of a decision-support system including a client device, a server, a database, sensors and a communication network,
- [Fig. 2] Figure 2 is a flowchart illustrating an example of the implementation of a decision-support method.

The invention will be described hereafter in its application in the field of vehicles, and more specifically in its application to aircrafts. The invention may be applied, according to an example, for decision-support in piloting pilot driven aircrafts or unmanned aerial vehicles. The invention can also be applied to related vehicle simulation.

A vehicle simulator is an electronic system that replicates the driving conditions of a vehicle through a digital simulator. Such a simulator makes it possible to train drivers to drive such vehicles without any human or material risk. The invention then makes it possible, in this context, to improve the said training.

However, as may be understood by the skilled person, the invention as described hereafter applies more generally for reliability analysis of policy capturing models implemented by AI assistance components in any other fields.

### System

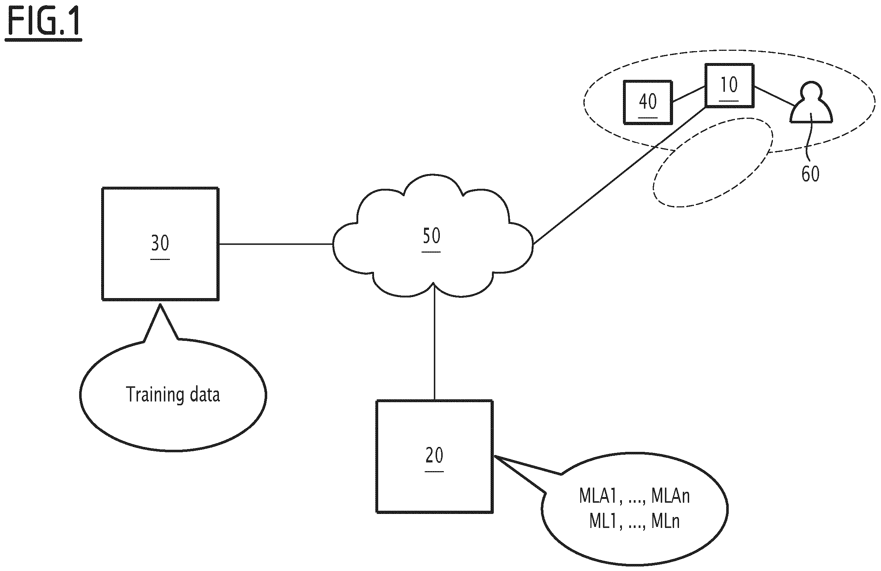

Referring to Figure 1, there is shown a schematic diagram of a decision-support system 5, the decision-support system 5 being suitable for implementing one or more non-limiting embodiments of the present technology.

It is to be expressly understood that the decision-support system 5 as shown is merely an illustrative implementation of the present technology.

In this example, the decision-support system 5 comprises a client device 10, a server 20, a database 30 and a plurality of sensors 40 communicatively coupled over a communication network 50.

### Client device and user

The client device 10 is associated with a user 60. In one or more embodiments, the user 60 may be a human expert in a given field and may analyze and/or interact with information displayed on a display interface of the client device 10 to perform labelling of training data, make decisions and/or predictions. It will be appreciated that the user 60 may also be a group of human experts.

For example in the field of avionics, the user 60 may be a pilot or an operator piloting an unmanned vehicle from a ground center.

The client device 10 comprises one or more electronic components such as: one or more single or multi-core processors collectively represented by a processor, one or more graphics processing units (GPU), a solid-state drive, a random access memory (RAM), a display interface or an input/output interface. It will be appreciated that the client device 10 may for example implemented as a desktop computer, a computer onboard a vehicle, a tablet, a smart phone and the like.

In the following description, the client device 10 is an on-board computer for an aircraft fitted with a plurality of sensors 40 and the user 60 is the pilot of said aircraft. Typically, the server 20 and the database 30 are outside the aircraft.

According to a variant, the aircraft is an unmanned aerial vehicle, fitted with a plurality of sensors 40, whereas the client device 10 is distant from the aircraft, and is configured to communicate with an onboard computer via a wireless communication protocol.

The client device 10 is configured to provide unlabeled and labeled objects to the server 20. Labeled object is numerical object that has been assigned one or more labels to add context or meaning. In machine learning and artificial intelligence, these labels often serve as a target for the model to predict.

In this description, a labeled object is a numerical recommendation and the associated label corresponds to validation (or not) of the recommendation by the user 60.

### Server

The server 20 is configured to:
- obtain labeled and unlabeled objects from the database 30 and/or the client device 10 ;
- access to a set of machine learning algorithms MLA1, MLA2, ..., MLAn ;
- train at least one of the machine learning algorithms MLA1, MLA2, ..., MLAn to obtain a set of machine learning models ML1, ML2, ..., MLn defined by an ID (1, ...n);
- perform online machine learning with the set of machine learning algorithms MLA1, MLA2, ..., MLAn and the set of machine learning models ML1, ML2, ..., MLn to obtain a plurality of machine learning results R1, R2, ..., Rn;
- evaluate results of the machine learning models ML1, ML2, ..., MLn according at least one metric ;
- generate and transfer at least one of the machine learning results R1, R2, ..., Rn to the client device 10 and/or to the database 30.

The set of machine learning algorithms MLA1, MLA2, ..., MLAn comprise one or more supervised MLAs. It will be appreciated that the set of MLAs may comprise two or more MLAs.

In the context of the present specification, a machine-learning algorithm (MLA) is a procedure that is executed on training data to obtain a machine learning (ML) model.

In one or more embodiments, the set of MLAs comprises, among others, a set of classification MLAs.

Additionally or alternatively, the set of MLAs may comprise a set of regression MLAs.

It will be appreciated that depending on the type of prediction task to be performed, i.e. classification or regression, the set of MLAs may comprise only the set of classification MLAs, only the set of regression MLAs or a combination thereof.

The set of classification MLAs comprises one or more classification MLAs, also known as classifiers which output models that attempt to estimate the mapping function (f) from the input variables (x) to one or more discrete or categorical output variables (y). The set of classification MLAs may include linear and/or non-linear classification MLAs.

Non-limiting examples of classification MLAs include: Perceptrons, Naive Bayes, Decision Tree, Logistic Regression, K-Nearest Neighbors, Artificial Neural Networks (ANN)/Deep Learning (DL), Support Vector Machines (SVM), and ensemble methods such as Random Forest, Bagging, AdaBoost, and the like.

The set of regression MLAs comprises one or more regression MLAs which output models that attempt to estimate the mapping function from the input variables to numerical or continuous output variables.

Non-limiting examples of regression MLAs include: Artificial Neural Networks (ANN)/Deep Learning(DL), Support Vector Machines (SVM), Linear Regression, Ordinary Least Squares Regression (OLSR), Stepwise Regression, Multivariate Adaptive Regression, Splines (MARS), and Locally Estimated Scatterplot Smoothing (LOESS).

The set of MLAs is configured to output a set of machine learning (ML) models after undergoing initialization, which may comprise a knowledge capture phase, also known as a training or a learning phase, during which the set of MLAs receive labelled data and output one or more ML models. In one or more other embodiments, the set of MLAs outputs the set of ML models after being initialized without performing the knowledge capture phase.

After undergoing initialization, the first MLA outputs a first ML model, the second MLA outputs a second ML model, and the third MLA outputs a third ML model etc. For example, MLAs are classification or regression models.

It will be appreciated that the server 20 can be implemented as a conventional computer server. More generally, the server 20 may be implemented in any suitable hardware and/or software and/or firmware or a combination thereof. In the disclosed non-limiting embodiment of present technology, the server 20 is a single server. In one or more alternative non-limiting embodiments of the present technology, the functionality of the server 20 may be distributed and may be implemented via multiple servers. The implementation of the server 20 is well known to the person skilled in the art.

However, the server comprises a communication interface configured to communicate with various entities (such as the database 30, for example and other devices potentially coupled to the communication network 50) via the communication network 50.

In this description, a machine-learning model refers to a policy-capturing model.

### Database

A database 30 is communicatively coupled to the server 20 and optionally the client device 10 via the communications network 50. But, in one or more alternative implementations, the database 30 may be communicatively coupled to the server 20 without departing from the teachings of the present technology.

The database 30 may receive data from the server 20 for storage thereof and may provide stored data to the server 20 for use thereof.

As a non-limiting example, the database 30 may comprise a PostgreSQL database.

In one or more embodiments of the present technology, the database 30 is configured to store a plurality of labelled objects and/or a plurality of unlabeled objects.

For example, the plurality of labelled objects are training data that can be used by the server 20 as an input of the set of machine learning algorithms MLA1, MLA2, ..., MLAn the to generate a retrain set of machine learning models machine learning models ML1, ML2, ..., MLn.

Training data may be initial training data or labelled data from previous recommendations. The nature of the given object is not limited, and a given object may be any digital representation of information. In one or more embodiments, a given object may be raw or unprocessed data in the form of byte code, a digital file or a document.

In one or more other embodiments, a given object may include at least partially processed data.

Each given object is associated with or represented by a set of features. The set of features are explanatory variables quantifying properties of the given object and used by experts for making decisions and/or models for outputting a recommendation or prediction. The set of features may include one or more of: categorical features, ordinal features, integer valued features, and real-valued features.

For example, a training data of a previous recommendation contains the ID of the used machine-learning model to provide it, the recommendation, parameter values and agreement indicator.

According to an embodiment, the agreement indicator is a binary state, indicating whether the expert user accepted or not the recommendation. For example, if the expert user is a pilot, the agreement indicator is equal to 1 if the pilot accepted the recommendation, 0 if not.

Advantageously, the agreement indicator is representative of the reliability of the recommendation as viewed by the user.

### Sensors

The plurality of sensors 40 is configured to sense a physical quantity that can influence the result of a machine-learning model in the form of an analog signal. More specifically, each sensor 40 is configured to measure the physical quantity or to receive a time signal from an external agent and generate a representative signal therefrom. The representative signal is generally an analog signal.

Thus, each sensor 40 corresponds, for example, to an antenna, a LIDAR, a radar or a position, pressure, brightness, altitude, speed or temperature sensor.

### Communication network

In one or more embodiments of the present technology, the communications network 50 is the internet. In one or more alternative non-limiting embodiments, the communication network 50 may be implemented as any suitable local area network (LAN), wide area network (WAN), a private communication network or the like.

It will be appreciated that implementations for the communication network 50 are for illustration purposes only.

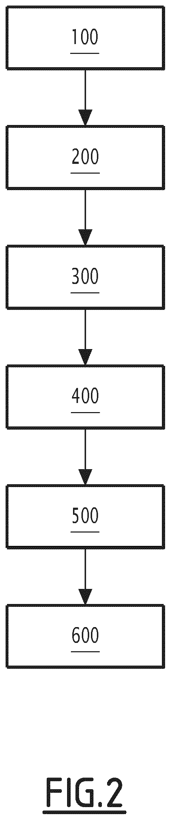

### Figure 2: method

The operation of the decision-support device is now described with reference to Figure 2, which illustrates an example of the implementation of a decision-support method.

In a first acquisition phase 100, the server 20 receives an input data following an evaluation event.

An input data comprises a plurality of parameters values, and in particular flight parameter values, relating to a context requiring a recommendation.

For example, the context can be: unstable weather conditions, flight phase change, receipt of a flight order or emergency measures.

Typically, flight parameter values refers to an unspecified number of parameters from sensors 40 that could affect the flight of the aircraft (luminosity, altitude, cockpit temperature, course to steer, speed, phase of flight, pressure, condition of onboard equipment, number of passengers, weight to be carried, fuel level, ...).

An onboard device is configured to send to the server, either via the client device 10 or via direct communication, new input data, either on request or if one of the flight parameter values is below or above a predetermined threshold.

In one embodiment, the evaluation event is one of a user's 60 request, the end of a preset time delay or a reception of new input data.

In a selection phase 200, the server 20 select a preferred machine-learning model MLP from a set of machine learning models ML1, ML2, ..., MLn according to the input data and at least one selection score.

The server 20 applies each of the machine learning models ML1, ML2, ..., MLn on the input data to determine a corresponding machine learning results R1, R2, ..., Rn.

According to an embodiment, at least one selection score is a prospective score and/or an introspective score and/or a retrospective score as described below.

A prospective score is representative of a predicted confidence level of each of the machine learning models.

According to an embodiment, the prospective score is the result of a supervisor machine learning meta-model, the supervisor machine learning meta-model being trained to provide a predicted confidence level of a machine-learning model as a function of the input data, and optionally other context parameters.

For example, contexts parameters refer to selected human decisions, environmental metrics about operating conditions, metrics related to human and/or system state or metrics calculated using the introspective analysis presented herein.

For example, the supervisor machine learning meta-model i. Typically, the confidence level is in the range 0 to 1. For example, a model is considered reliable if the associated confidence level is greater than a predefined threshold.

The supervisor machine learning meta-model is trained on training data for each machine learning model MLi comprising input data, result of the machine-learning model and the associated accuracy indicator. Therefore, the supervisor machine learning model is trained to learn from each machine learning model past error to output the predicted confidence level. Such a supervisor machine learning meta-model intrinsically takes into account the context.

In one embodiment, one selection score is an introspective score.

The introspective score is a function of the input data of a machine-learning model and takes into account of three training metrics: model convergence, interpolation/extrapolation and blind spot.

The model convergence metric of a machine learning model MLi of the set of machine learning models ML1,..., MLi, ..., MLn represents the ratio of the machine learning models of the set of machine learning models ML1, ..., MLi-1, MLi+1, ... MLn that agree with the result of the machine learning model MLi.

For example, the model with the best predictive accuracy based on a 10-fold cross-validation procedure is selected. If the rate of other models converging towards the same result is high, the model convergence metric increases. A high model convergence metric reduces reliability uncertainty.

The interpolation/extrapolation metric is a binary state (1 or 0) that indicating if the parameters values used as input data are in range of parameter values of the training data.

For example, a new input data is considered as an "extrapolation" if at least one of its parameters values is lower than the associated training data minimum or higher than the associated training data maximum.

A new input data is considered as an "interpolation" if all of its parameters values are higher than the associated training data minimums and lower than the associated training data maximums. In other terms, new input data is considered as an "interpolation" if all of its parameters values are within the training data envelope.

Indeed, for each machine learning model, the training data used influences the reliability of the result, and in particular, if the parameter values are not within the range of parameters of the training data, the result is less likely to be reliable.

The blind spot metric represents a Boolean characterizing the presence or absence of new data in a parametric space.

For example, the supervisor machine learning meta-model is configured to generate the parameter space comprising a plurality of zones from a plurality of data points with different feature values. Then, a clustering algorithm maps the entire parametric space and when a new data is presented to the supervisor machine learning meta-model, it checks whether the group to which it corresponds has been covered in the training data.

For example, a parameter space 2D 10X10 grid with 100 cells and around 100 000 points are generated. Then, the clustering algorithm is used to map the whole parameter space into 100 zones and the training data set of 100 000 points mark each of the 100 zones as being covered or not during training. A new input data is considered in a blind spot if these values are not included in a marked zone.

Finally, the introspective score is, for each machine learning model MLi, is a binary state based on an average or weighted average of one or more of these three metrics (1 represents a maximum reliability and 0 a minimum reliability).

In one embodiment, one selection score is a retrospective score. The retrospective score of a machine learning model of the set of machine learning models ML1, ML2, ..., MLn represents the agreement rate of the user 60 on the stored training data associated to the said machine learning model.

The agreement rate is computed, for each machine learning model MLₖ of the set of machine learning models ML1, ML2, ..., MLn, on historical data stored, the historical data comprising stored training data including the input data, the result and the corresponding agreement indicator. The historical data is for example stored within a time window of set duration, and the agreement rate is computed as a number or a percentage of agreement indicator values equal to 1 during the time window. Alternatively, the agreement rate is computed on the last N stored training data, N being an integer.

Optionally, for each machine learning model MLₖ, the agreement rate is compared to an agreement rate threshold, and if the agreement rate is below the agreement rate threshold, the corresponding machine-learning model MLₖ considered unreliable in view of the agreement rate.

In one embodiment, the preferred machine-learning model is selected according the prospective score, the introspective score and the retrospective score. The method comprises, for each machine learning model MLi, the computation of the prospective score, the introspective score and the retrospective score. Then, for each machine-learning model, the selection score is computed as a function of the prospective score, the introspective score and the retrospective score. For example, the selection score is computed as the average of the prospective score, the introspective score and the retrospective score.

The preferred machine-learning model is the one for which the selection score is the highest among the set of machine learning models ML1, ML2, ..., MLn.

A degree of reliability is obtained as a function of the at least one selection score associated to the preferred machine learning model MLp. For example, the degree of reliability is an average or a weighted average of the at least one selection score associated to the preferred machine learning model MLp.

The result of the preferred machine-learning model takes the form of a recommendation and corresponding to an action to be taken by the pilot depending on the flight context.

For example, the recommendation may be to change heading, speed or phase of flight according to weather conditions, order of the Air Traffic Control (ATC) or presence of an obstacle.

In another example, the recommendation may be to remove or reapply the seatbelt sign following activation of a safety protocol.

In a transmission phase 300, the server 20 sends the recommendation and the degree of reliability to the client device 10 via the communication network 50.

In a supply phase 400, the client device 10 provides the recommendation to the user 60.

For example, the recommendation is provided in the form of a notification on the display interface, e.g. the screen, of the client device 10, an audible alert or a clearance.

In a return phase 500, the user 60 can accept or reject the recommendation and return decision data to the communication network 50 for storage in database 30.

For example, the decision data is a labeled object that also contains the ID of the used machine-learning model, the recommendation, the parameter values and the agreement indicator. The agreement indicator is a binary state, indicating whether the expert user accepted or not the recommendation. For example, if the expert user is a pilot, the agreement indicator is equal to 1 if the pilot accepted the recommendation, 0 if not.

The decision data is then stored and used to generate training data for each of the machine learning models of the set of machine learning models. For each of the machine learning models, the agreement indicator is computed from the decision data.

During an optional re-training phase 600, the server 20 generates a plurality of re-trained machine learning models ML1, ..., MLn on the new training data if the agreement rate is below a pre-determined threshold or if the user 60 requests it via the client device 10.

### Advantages

Advantageously, this method can be used to identify unreliable recommendations.

Advantageously, this method makes it possible to provide a degree of reliability in real time in order to accept or reject the recommendation.

Advantageously, this method can be configured according to the user's needs in function of thresholds, models used or actions to be triggered in the event of unreliability.

## Claims

1. Method of decision-support for a vehicle or related vehicle simulation following an evaluation event by using a set of machine learning models, the method being executed by a system comprising a server (20), a client device (10) and a database (30); the method being **characterized in that** it comprises the following phases :
a. an acquisition phase (100) in which the server (20) receives an input data from a device onboard of the vehicle, the input data comprising a plurality of parameter values from sensors,
b. a selection phase (200) in which the server (20) applies a set of machine learning models ML1, ML2, ..., MLn on the input data to obtain a plurality of machine learning results R1, ..., Rn and computes at least one selection score, then at least one selection score being used to select a preferred machine-learning model MLp,
c. a transmission phase (300) in which the server (20) sends the result Rp of the preferred machine learning model MLp as a recommendation and an associated degree of reliability to the client device (10) on board of the vehicle, the associated degree of reliability being obtained as a function of the at least one selection score associated to the preferred machine learning model MLp,
d. a supply phase (400) in which the client device (10) provides the recommendation to a user (60),
e. a return phase (500) in which following the user's (60) agreement or rejection of the recommendation, the client device returns decision data to the database (30), the decision data comprising an agreement indicator.

2. Method according to claim 1, wherein the computation of a selection score comprises the computation of at least one score among a prospective score, a retrospective score and an introspective score.

3. Method according to claim 2, wherein the prospective score is computed based on a result of a supervisor machine learning meta-model, the supervisor machine learning meta-model being trained to provide a predicted confidence level of the result of each machine learning model as a function of input data, the result of said machine learning model and the context of the result.

4. Method according to claim 3, wherein the confidence level predicted by the supervisor machine learning meta-model is in the range 0 to 1.

5. Method according to any of claims 2 to 4, wherein the introspective score computed, for each machine learning model, as a function of the input data and of training input data used for training said machine learning model.

6. Method according to any of claims 2 to 5, wherein the retrospective score is computed, for each machine learning model, as a function of an agreement rate of results of said machine learning model computed from stored agreement indicators.

7. Method according to any of claims 2 to 6, wherein the selection phase comprises, for each machine learning model, the computation of said prospective score, said introspective score and said retrospective score, and the selection score is a function of the prospective score, the introspective score and the retrospective score.

8. Method according any one of the claims 1 to 7, wherein the evaluation event is one of a user's request, the end of a preset time delay or a reception of new input data.

9. Method according to one of the claims 1 to 8, wherein a training phase is implemented after the return phase during which the server (20) generates a plurality of re-trained machine learning models ML1, ..., MLn on new training data comprising decision data.

10. Computer program containing software instructions which, when executed by a computer, implement a method of decision-support for a vehicle or related vehicle simulation according to any one of claims 1 to 9.

11. System of decision-support for a vehicle or related vehicle simulation following an evaluation event by using a set of machine learning models, the system comprising a server (20), a client device (10), a database (30) and being configured to implement:
a. receiving an input data from a device onboard of the vehicle, the input data comprising a plurality of parameter values from sensors,
b. applying a set of machine learning models ML1, ML2, ..., MLn on the input data to obtain a plurality of machine learning results R1, ..., Rn and computes at least one selection score, then at least one selection score being used to select a preferred machine-learning model MLp,
c. sending the result Rp of the preferred machine learning model MLp as a recommendation and an associated degree of reliability to the client device (10) on board of the vehicle, the associated degree of reliability being obtained as a function of the at least one selection score associated to the preferred machine learning model MLp,
d. providing the recommendation to a user (60),
e. returning decision data to the database (30) following the user's (60) agreement or rejection of the recommendation, the decision data comprising an agreement indicator

## Amended claims

### Amended claims in accordance with Rule 137(2) EPC.

1. Method of decision-support for a vehicle or related vehicle simulation following an evaluation event by using a set of machine learning models, the related vehicle simulation being an electronic system that replicates the driving conditions of the vehicle through a digital simulator, the method being executed by a system comprising a server (20), a client device (10) and a database (30); the method being **characterized in that** it comprises the following phases :
a. an acquisition phase (100) in which the server (20) receives an input data from a device onboard of the vehicle, the input data comprising a plurality of parameter values from sensors,
b. a selection phase (200) in which the server (20) applies a set of machine learning models ML1, ML2, ..., MLn on the input data to obtain a plurality of machine learning results R1, ..., Rn and computes at least one selection score, then at least one selection score being used to select a preferred machine-learning model MLp,
c. a transmission phase (300) in which the server (20) sends the result Rp of the preferred machine learning model MLp as a recommendation and an associated degree of reliability to the client device (10) on board of the vehicle, the associated degree of reliability being obtained as a function of the at least one selection score associated to the preferred machine learning model MLp,
d. a supply phase (400) in which the client device (10) provides the recommendation to a user (60),
e. a return phase (500) in which following the user's (60) agreement or rejection of the recommendation, the client device returns decision data to the database (30), the decision data comprising an agreement indicator, the computation of a selection score comprising the computation of at least one score among a prospective score, a retrospective score and an introspective score, said introspective score being computed, for each machine learning model, as a function of the input data and of training input data used for training said machine learning model.

2. Method according to claim 1, wherein the prospective score is computed based on a result of a supervisor machine learning meta-model, the supervisor machine learning meta-model being trained to provide a predicted confidence level of the result of each machine learning model as a function of input data, the result of said machine learning model and the context of the result.

3. Method according to claim 2, wherein the confidence level predicted by the supervisor machine learning meta-model is in the range 0 to 1.

4. Method according to any of claims 1 to 3, wherein the retrospective score is computed, for each machine learning model, as a function of an agreement rate of results of said machine learning model computed from stored agreement indicators.

5. Method according to any of claims 1 to 4, wherein the selection phase comprises, for each machine learning model, the computation of said prospective score, said introspective score and said retrospective score, and the selection score is a function of the prospective score, the introspective score and the retrospective score.

6. Method according any one of the claims 1 to 5, wherein the evaluation event is one of a user's request, the end of a preset time delay or a reception of new input data.

7. Method according to one of the claims 1 to 6, wherein a training phase is implemented after the return phase during which the server (20) generates a plurality of re-trained machine learning models ML1, ..., MLn on new training data comprising decision data.

8. Computer program containing software instructions which, when executed by a computer, implement a method of decision-support for a vehicle or related vehicle simulation according to any one of claims 1 to 7.

9. System of decision-support for a vehicle or related vehicle simulation following an evaluation event by using a set of machine learning models, the system comprising a server (20), a client device (10), a database (30) and being configured to implement :
a. receiving an input data from a device onboard of the vehicle, the input data comprising a plurality of parameter values from sensors,
b. applying a set of machine learning models ML1, ML2, ..., MLn on the input data to obtain a plurality of machine learning results R1, ..., Rn and computes at least one selection score, then at least one selection score being used to select a preferred machine-learning model MLp,
c. sending the result Rp of the preferred machine learning model MLp as a recommendation and an associated degree of reliability to the client device (10) on board of the vehicle, the associated degree of reliability being obtained as a function of the at least one selection score associated to the preferred machine learning model MLp,
d. providing the recommendation to a user (60),
e. returning decision data to the database (30) following the user's (60) agreement or rejection of the recommendation, the decision data comprising an agreement indicator,
the computation of a selection score comprising the computation of at least one score among a prospective score, a retrospective score and an introspective score, said introspective score being computed, for each machine learning model, as a function of the input data and of training input data used for training said machine learning model.
